# EUROPEAN PATENT APPLICATION

(11) **EP 1 047 253 A2**
(43) Date of publication of application: **25.10.2000**
(21) Application number: 00660074.6
(22) Date of filing: 20.04.2000
(51) Int. Cl.: H04M 1/725

(54) **Method for controlling a user profile and a wireless communication device**

(30) Priority: 23.04.1999 FI 990925
(71) Applicant: NOKIA MOBILE PHONES LTD., 02150 Espoo (FI)
(72) Inventor: Järvi, Jukka, 41120 Puuppola (FI)
(74) Representative: Pursiainen, Timo Pekka

(57) **Abstract**

The invention relates to a wireless communication device and a method in a wireless communication device (1) with one or more functional properties that can be set by the user. In the method, time information is maintained, user profiles (302-308) are set in which a setting value is defined for at least one said functional property of the wireless communication device (1), and one of said user profiles (302-308) is selected as an active user profile. Those properties of the wireless communication device for which a setting value is defined in said activated user profile, are set according to the setting values defined in said activated user profile. The method also includes selecting at least moment of activation for at least one user profile (302-308), and comparing said time information with the moments of activation defined for the user profiles (302-308), wherein when the moment of activation of a user profile (302-308) is up, the functional properties of the wireless communication device are set according to said user profile (302-308).

## Description

The present invention relates to a method in a wireless communication device with one or more functional properties that can be set by the user, which method is used to maintain time information, to set user profiles in which a setting value is defined for at least one said functional property of the wireless communication device, and to select one of said user profiles as an active user profile, wherein those properties of the wireless communication device for which a setting value is defined in said activated user profile, are set according to the setting values defined in said activated user profile. Furthermore, the invention relates to a wireless communication device which comprises means for setting one or more functional properties, means for defining the time, means for defining at least one user profile in which a setting value is defined for at least one said functional property of the wireless communication device, means for selecting the user profile as active, and means for setting the functional properties of the wireless communication device according to the setting values defined in the selected activated user profile.

Wireless communication devices have considerably more functional properties that can be set than conventional telephones of a landline telecommunications network. For example, there are known wireless communication devices which have means for adjusting the sound volume, wherein the sound volume of the receiver/speaker of the wireless communication device can be adjusted in different ambient conditions to be suitable with respect to ambient noise and use conditions. Thus, a greater sound volume can be used outdoors or in a car than in a quieter environment, such as in a theatre or at a meeting.

In several wireless communication devices of prior art, there is a possibility to set also the ringing tone to a desired level. Thus, when moving outdoors, the user of the wireless communication device may set the ringing tone to a greater volume level than when moving indoors. Moreover, the ringing tone can be switched off (mute). Thus, *e.g.* in a theatre, at a concert, or at a conference, disturbance to others is avoided in case someone tries to reach the user of the wireless communication device. For such situations, also batteries comprising vibrating means have been developed, whereby the user of the wireless communication device can be inconspicuously informed of an incoming call.

In the above-mentioned settings of sound volume and ringing tone volume, it is typically possible to select several different volume levels. In addition to these sound volume properties, wireless communication devices have functions with an on/off character, such as display backlight, keypad lighting, keypad tones, call transfer, alarm tones, *etc.*

In wireless communication devices of prior art, as presented e.g. in US patent publication 5,479,476, the settings of the functional properties of the wireless communication device are selected by using menu functions or the like, either one by one or by means of different user profiles. Thus, the wireless communication device is equipped with a possibility to set up and store different user profiles for different use situations. Such user profiles involve the possibility to set various setting values for the selectable functional properties of the wireless communication device. Thus, according to the situation, the user may select one of these user profiles stored in the wireless communication device. For example, when moving from indoors out, the user selects a user profile with setting values defined suitable for outdoor conditions *e.g.* for sound volume, ringing tone volume, key tones and call transfer. In a corresponding way, when the user moves from outdoors in, the user may select another user profile with suitable settings for indoors. Thus, the user does not need to set all the parameters separately, such as the sound volume, ringing tone volume, key tones, and call transfer, but it is sufficient that the user selects one user profile suitable for the situation.

It is possible to have several such user profiles stored in the wireless communication device, depending on *e.g*. the memory capacity reserved for these different user profiles in the wireless communication device. Furthermore, each user of the wireless communication device can have their own personal user profiles stored. Thus, each user may make their own user profiles and store them in the memory means of the wireless communication device.

Even though the above-mentioned user profile function considerably facilitates the use of the wireless communication device, the user must, however, always select the user profile suitable for each situation. Thus, it may *e.g.* happen that the user forgets to change the user profile when s/he goes *e.g.* to a concert. If the ringing tone of the phone is not selected mute in the active user profile, the ringing tone of the wireless communication device may disturb other people present. On the other hand, the ringing tone may be left mute when the user leaves a concert, a meeting, *etc.,* wherein the user may not necessarily notice an incoming call.

It is an aim of the present invention to present a method for selecting a user profile in a wireless communication device, as well as a wireless communication device according to the method. The invention is based on the idea that the selection of the user profile is based on calendar events, wherein the user may use the calendar function to store in advance the moment of selecting a user profile suitable for each event, wherein the properties of the wireless communication device are set at a determined moment of time according to the selected user profile. If necessary, the user may be requested a confirmation of setting the properties, before the settings of the user profile are taken into use. The method according to the present invention is characterized in that the method also includes
- selecting at least moment of activation for at least one user profile, and
- comparing said time information with the moments of activation defined for the user profiles, wherein when the moment of activation of a user profile is up, the functional properties of the wireless communication device are set according to said user profile.

The wireless communication device according to the present invention is characterized in that the wireless communication device also comprises:
- means for setting at least one moment of activation for at least one user profile,
- means for comparing the moments of activation defined for the user profiles with the time defined, and
- means for selecting a user profile active when the moment of activation defined for it is up.

With the present invention, significant advantages are achieved when compared to methods and wireless communication devices of prior art. In the wireless communication device of the invention, the user may in advance set one or more moments of time, wherein the user profile selected for the wireless communication device is the user profile suitable for each situation. Thus, the user can store meetings, other appointments, trips, concerts, *etc.* in advance and set for each event a suitable user profile. Thus, it can be better secured that the wireless communication device does not disturb other people present, and on the other hand, after the termination of the set event, the user does not necessarily take care of restoring the settings of the wireless communication device, but the settings can be restored also in this case on a calendar basis.

In the following, the invention will be described in more detail with reference to the appended drawings, in which
- Fig. 1: shows a wireless communication device in a perspective view,
- Fig. 2: shows a wireless communication device according to an advantageous embodiment of the invention in a reduced block chart, and
- Fig. 3: shows an advantageous selection of user profiles in a wireless communication device according to the invention.

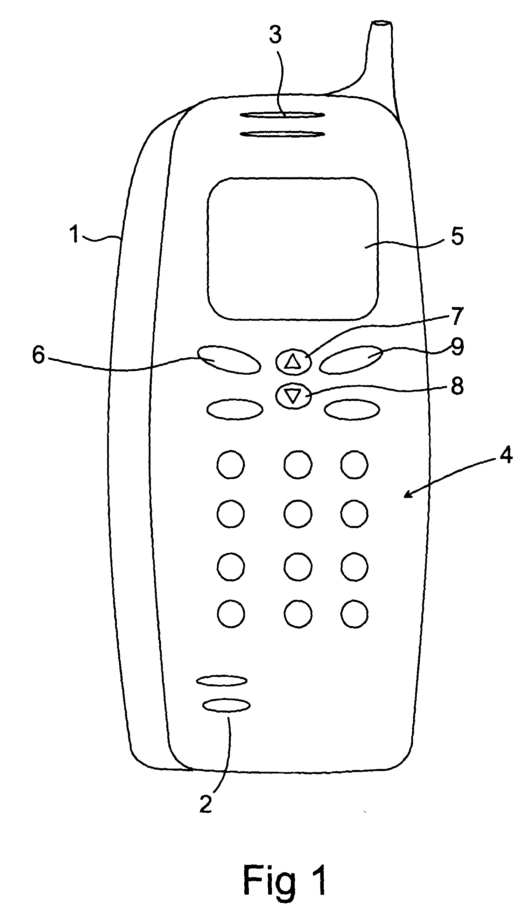

Figure 1 shows a wireless communication device, in connection with which the present invention can be advantageously applied. The wireless communication device 1 comprises *e.g*. a microphone 2, a receiver 3, a keypad 4, as well as a display device 5, such as an LCD display device. The keypad 4 is used *e.g.* in connection with telephone functions to answer a call and to select a telephone number. Also, the keypad 4 is used to change the functional settings of the wireless communication device 1 preferably by means of so-called menu functions. In the wireless communication device 1 of Fig. 1, access to these menu functions is with a menu key 6. Thus, the display device 5 of the wireless communication device is used to display various information related to these menu functions. The information on the display can be browsed with scrolling keys 7 and 8, wherein the information on the display is changed according to the menu in question and which scrolling key 7, 8 is pressed. Exit from the menu functions is possible *e.g.* with an end key 9. On the other hand, menu functions are usually hierarchical, wherein a shift from an upper menu level to lower menu levels can be made with the menu key 6 and with the scrolling keys 7, 8. Thus, the end key 9 is typically used to re-enter an upper level in the menu hierarchy, which is known as such. It is obvious that the wireless communication device 1 and the keys used therein are only illustrative and not restrictive examples, and in practical applications, the contents of the keypad 4 as well as the information to be presented on the display device 5 may vary.

The wireless communication device 1 can also comprise communication means 20 for incoming communication from a mobile communication network (not shown) to the wireless communication device 1 and for communication transmitted from the wireless communication device 1 to the mobile communication network, which is known as such.

The menu functions can be used to set *e.g.* the ringing tone volume and to switch the key tones, alarm tones and backlight on or off. Further, the menu functions can be used to define *e.g.* a call transfer. In several cases, the menu functions also include a possibility to cancel the previous selection, wherein the setting is restored to the value preceding the selection.

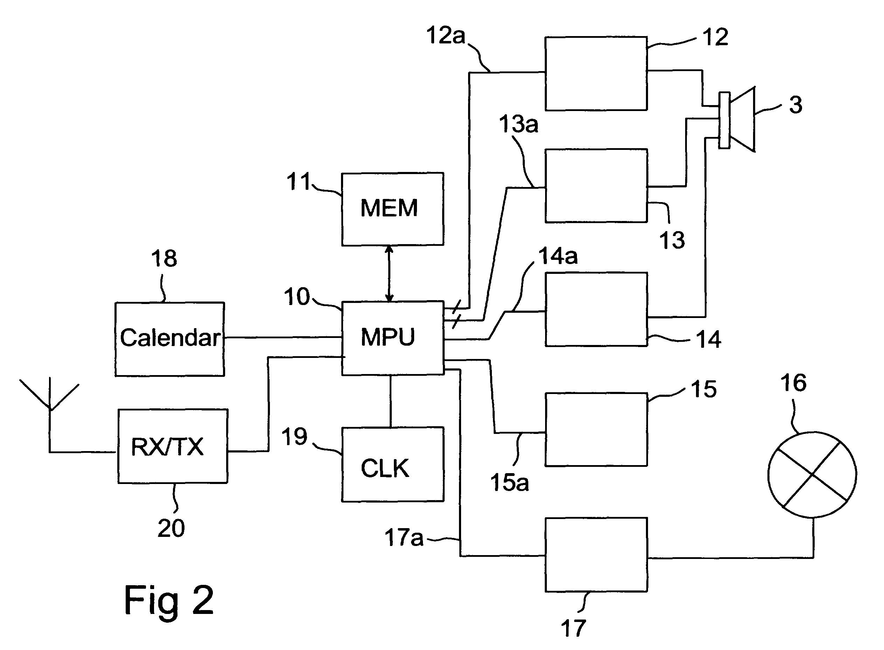

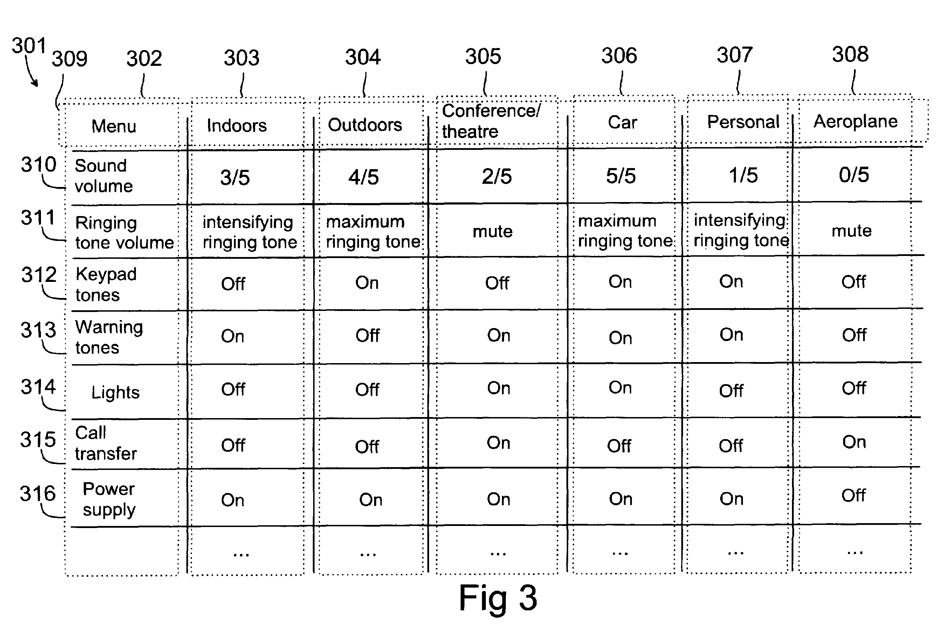

The following is a description on a preferred example of setting and storing the functional properties of a wireless communication device 1 with reference to the block chart of Fig. 2 and the user profile table of Fig. 3. The table of Fig. 3 shows as an example six different user profiles in columns 303―308. In the table, the first column 302 shows the property to be set. Horizontal lines 310―315 of the table show the settings of different user profiles for each property. The first line 309 in the table shows the identifier of the user profile. In Fig. 3, the example user profiles are named as follows: indoors, outdoors, at a meeting / in a theatre, in a car, in an aeroplane, and personal. It is obvious that there can be more of these different user profiles than those presented above, and on the other hand, for example the meeting user profile can be further divided into several user profiles of different type, wherein on the basis of the importance of the meeting, it is possible to select different functional properties of the wireless communication device 1, as will be described in more detail below in this specification.

When the wireless communication device 1 is used indoors, where ambient noise is usually weaker than outdoors, the sound volume can be set lower than the maximum volume; in this example, the sound volume of the receiver 3 is set at the value 3/5 of the maximum. This is illustrated on line 310 in the table of Fig. 3. Also, the ringing tone does not normally need to be as high indoors as outdoors, wherein *e.g.* 3/5 will be sufficient, or the ringing tone can be set to have an increasing volume, as shown in column 303 on line 311 in the example of the table in Fig. 3. Thus, the first ringing tone is usually relatively low, but the volume of the ringing tone will increase, if the call is not immediately answered. In this example, the key tones are switched off in the indoors user profile, wherein no sound signal is given of pressing a key (line 312). Alarm tones (line 313 in the table of Fig. 3) are kept on, wherein a sound signal is given to the user upon for example faulty pressing of a key or failure of a network service, such as call transfer, and the user is also warned of running down of the battery of the wireless communication device 1. Ambient light is normally relatively good indoors, wherein backlight does not need to be kept on (line 314). It is also assumed that the user is capable of answering incoming calls, wherein the call transfer functions is turned off (line 315). Moreover, the power supply of the wireless communication device 1 is in the normal function (line 316).

When the user moves from indoors out, the user advantageously selects another user profile 304 (outdoors). Thus, the user of the wireless communication device 1 may be disturbed by ambient noise from different sources, wherein the sound volume of the receiver 3 is increased and the ringing tone volume is raised *e.g*. to its maximum value. Furthermore, it is advisable to keep the key tones turned on in outdoor conditions, wherein the user receives a sound signal formed by the wireless communication device as a sign that the wireless communication device 1 has reacted to pressing of a key in the keypad 4. In this example profile, warning sounds, backlight and call transfer are turned off and power supply is set in the normal function.

In a situation in which the user enters a meeting, a theatre or a corresponding occasion in which the ringing tone should be kept off, the next user profile 305 (meeting/theatre) can be set. Thus, the sound volume of the receiver 3 is set at a relatively low level: 2/5 of the full volume. Moreover, the ringing tone and key tones are turned off. Warning alarms are presumed to be less disturbing, wherein they can be turned on in this user profile. Ambient light is not necessarily the best possible in theatrical or corresponding auditoria, wherein the backlight is turned on. Thus, the backlight of the keypad is on *e.g.* all the time, and the backlight of the display is turned on when information is displayed on the display, *e.g*. when the user enters a telephone number, browses menu functions or during an incoming call. In this user profile, however, call transfer is turned on, wherein incoming calls to the wireless communication device 1 are directed to another predetermined telephone number or telephone answering service. Power supply is arranged to be normal in this profile alternative.

In car alternative 306 of the user profile, the sound volume of the receiver 3 is set to the maximum, as well as the maximum volume is set for the ringing tone, because ambient noise is normally relatively loud in a car. For this reason, also the key tones, warning tones and backlight are turned on in the car profile according to this example. Nevertheless, call transfer is turned off, wherein incoming calls are directed normally to the wireless communication device 1. Also in this alternative, power supply is in the normal position.

When travelling in an aeroplane, the wireless communication device 1 must be turned off. For this purpose, the table of Fig. 3 shows still a power-off user profile 307. Thus, sound volume and ringing tone volume are set at the value "mute"; also the key and warning tones and the backlight are switched off. However, call transfer is activated. Power supply of the wireless communication device 1 is set to a standby state, in which the operating voltage is only switched to keep the timer on, if this is allowed. In some cases, the power supply for the whole device must be turned off, wherein time data is updated to the wireless communication device 1 preferably via the mobile communication network after the user has left the aeroplane and turned the wireless communication device 1 on.

It is obvious that wireless communication devices 1 can have not only the above-mentioned functional properties to be set but also other properties which can be set according to the situation preferably by user profiles.

In the wireless communication device 1 according to the invention, the control of the user profiles can also be applied in the following way by using a kind of group setting, wherein a setting value is defined for one or more functional properties of the wireless communication device 1, the setting value being substantially irrespective of the value set for this functional property of the user profile active at the time. In addition, a condition is set for introducing said setting value. Thus, the user may define that *e.g.* the ringing tone is turned on, if a call comes in from a certain number, *e.g.* a superior is calling, even though a user profile is activated in which the ringing tone is switched off. In this group setting, however, it is also advantageously possible to select in which user profiles this function is allowed, because *e.g.* said power-off user profile is used particularly in such situations in which the telephone must not be turned on in any conditions, at least without a permission given by the user.

In addition to telephone functions, also other functions are developed for wireless communication devices, such as notebook functions and calendar functions, which have previously required the use of a separate device, such as a personal digital assistant (PDA). Thus, the user can write notes in the memory means of the wireless communication device. Further, with the calendar functions, the user can book down appointments, trips and other events as well as their starting times and possibly also ending times. If necessary, the calendar function can be set to remind the user of the beginning of an event shortly before the time of the event. The calendar functions is illustrated by block 18 in the appended Fig. 2. In a wireless communication device 1 according to a preferred embodiment of the invention, browsing of the calendar and entry of the event data in the calendar function are performed via the menu functions. Thus, the menu can be browsed by pressing the menu key 6. The functions that can be selected are displayed on the display device 5. Because the quantity of information that can be displayed by the display device 5 at one time is limited, normally only a part of the menu or one alternative at the time is displayed at a time. The scrolling keys 7, 8 can be used to move in the menu to the next or previous selection alternative, which is separated from the other alternatives *e.g.* by displaying text as light with a dark background and the other alternatives as dark text on a light background, if more than one selection alternative is displayed at a time. When the desired selection alternative has been found, it can be selected preferably by pressing the menu key 6. Thus, information according to the selected alternative is displayed on the display device 5. In the calendar function, *e.g.* a list is formed of the function alternatives available in this situation, such as scroll, find, alter. In the scrolling function, a list is made of events defined by the user for the day in question, with their starting and ending times, as well as other information possibly related to the event, such as notes recorded by the user. The user can scroll the data of different days *e.g.* by using the scrolling keys 7, 8. With the find function, the user can preferably use the numerical keys to select the desired date to be examined in the calendar and to be altered, wherein the user can add, alter and/or delete events in the calendar. It will be defined below in this description how it is possible to define the calendar functions and the respective user profile selections.

In the following, we will describe the function according to a preferred embodiment of the invention with reference to Figs. 1 and 2. The block chart of Fig. 2 shows on a principle level only those functional blocks by means of which the method and wireless communication device 1 will be described. Also, the connections between these functional blocks are shown in the block chart of Fig. 2. It is obvious that in practical applications the details can be very different in different wireless communication devices 1, but anyone skilled in the art is capable of applying the invention by means of the appended description and drawings. An essential block for controlling the operation of the wireless communication device 1 is a processor 10, such as a micro processing unit (MPU) or the like. Memory means 11 comprise preferably a read-only memory for storing application software of the processor 10 and different manufacture settings, a random access memory (RAM) *e.g.* for storing data during the use, and a non-volatile random access memory NVRAM in which *e.g.* user profiles can be stored that are preserved in the memory also in a situation that the power is switched off for the wireless communication device 1 or the battery is run down. Also the read-only memory used can be such a non-volatile memory, FLASH memory or another corresponding memory where data is maintained even during breaks in the power supply. Such a memory has for example the advantage that software can be updated without changing the actual memory circuit.

The processor 10 is coupled to control via a control line 12a the sound volume control 12 to the receiver 13, to set the sound volume level desired at each time for the signal to be transferred to the receiver 3. This control is performed *e.g.* in binary format, wherein the processor 10 sets a numerical value corresponding to the sound volume to a control register for the sound volume control (not shown), or the like. If there are six levels required for the sound volume, as presumed in the table of Fig. 3, the processor 10 writes an integer value from zero to five to the control register of the sound volume control 12. Thus, the numerical value 0 corresponds to muting of the receiver 3 and the value 5 corresponds preferably to the maximum sound volume. It is obvious that the numerical values presented in this context are only used to clarify the invention, not as restrictive examples, and also other numerical values can be used in practical applications. On the basis of this numerical value, the sound volume control 12 controls the amplification in such a way that the desired sound volume level is achieved, which is known as such.

In a corresponding manner, to select the ringing tone and to define the volume level, a ringing tone control unit 13 comprises means for controlling the ringing tone volume and, if necessary, also means for generating different ringing tones. Via a ringing tone control line 13a, the processor 10 controls also this ringing tone control unit 13 preferably in a binary number.

Warning tones, key tones and backlight settings are of on/off type, wherein one binary signal for each will be sufficient to control them. Thus, the processor 10 sets a control line 14a for a warning tone control unit 14 preferably into logical 0 state or logical 1 state depending on whether the warning tones are wished to be on or off. In a corresponding way, a key tone control unit 15 is controlled with the processor 10 by means of a key tone control line 15a. A backlight 16 can be turned on for example by setting the binary digit 1 in a backlight control unit 17, and when the backlight 16 is turned off, the control line 17a for this backlight control unit 17 is set in the logical 0 state, correspondingly. The logical 0 state corresponds for example to *ca.* 0 volts, and the logical 1 state corresponds for example to a voltage value of the operating voltage.

Figure 2 does not show the call transfer function, because the call transfer function depends, in practice, on the mobile telephone system used at a given time as well as on the wireless communication device 1, and it can be typically implemented in the software. In the call transfer, incoming calls to a wireless communication device 1 are not directed to the wireless communication device 1 but the mobile communication network transfers the calls to the telecommunication terminal whose number is defined as the call transfer number. Thus, when the call transfer is turned on, the wireless communication device 1 transmits information to the mobile telephone switching centre about the call transfer and the telephone number to which the transfer is directed. Thus, in a situation in which there is an incoming call to the wireless communication device 1 in question, it is detected in the mobile communication network that the call transfer is turned on, and the call is directed to this call transfer number. The call transfer number can, in a known way, be also the number of the answering service for the user of the wireless communication device 1. Such an answering service is a mobile communication network service offered by the operator of the mobile communication network, by means of which the caller can dictate a message for the user of the wireless communication device in situations in which the call cannot or is not desired to be coupled to the wireless communication device 1.

The power supply of the wireless communication device 1 can be set to said standby state for example in such a way that the processor 10 switches the power off from all the auxiliary devices except for the timer function, and sets its own function in a standby state. Thus, the wireless communication device 1 can be restored to the functional state *e.g.* by pressing the current switch.

The wireless communication device 1 is provided with a clock block 19, by means of which the current day and time are known in the wireless communication device 1. This clock block 19 can be implemented as a separate clock circuit or it can be integrated in the application software of the processor 10. Thus, the timing can be obtained from the clock generator of the processor 10 (not shown), whose frequency is known. In some applications, the clock signal can be transmitted by the mobile communication network, wherein the timing of the clock block 19 in the wireless communication device can be synchronized at intervals with the time of the mobile communication network.

In this wireless communication device 1 according to an advantageous embodiment of the invention, the calendar events and the related user profile settings are preferably set in the following way. The menu button 6 is used to move to the menu function, from which the scrolling keys 7, 8 are used to find the calendar function. When the calendar function is activated, the application presents events stored in the calendar for the day in question. The user selects the day for which he/she wants to change the data. After selecting the desired day, the user selects the time of the event and possibly even the (estimated) duration of the event and, if necessary, writes a more specific definition. Moreover, the user defines a user profile suitable for the nature of the event, such as meeting, trip, theatre. If necessary, the meeting and trip user profile can also be defined in more detail; for example, a priority scale can be defined for the meeting, which may affect *e.g.* the volume of the ringing tone, and a vehicle can be defined for the trip, *e.g.* aeroplane, train, or car. The power-off alternative means in practice that the wireless communication device 1 is turned off for the time of the flight or is set in said standby state. For the trip event, the user has possibly entered the duration of the trip. Because the schedules of vehicles are not always accurate in practice, particularly in the power-off alternative the user must be asked if the user profile can be changed. Hereby it can be secured that the wireless communication device 1 will not change its state during a flight.

The processor 10 of the wireless communication device 1 monitors the events marked in the calendar *e.g.* in the following way. The software of the processor 1 is equipped with a clock interruption or the like defined to make the processor to execute the examination of the calendar events at intervals of for example *ca.* 1 minute. The processor 10 compares the current time with the time data of the events entered in the calendar. If the comparison indicates that the time defined for a calendar event is the same as the time data of the reference moment, the processor 10 sets the settings of the wireless communication device 1 to comply with the user profile defined for this calendar event, if the automate function is allowed. If a confirmation is defined in the valid user profile, the processor 10 generates a message on the display 5 of the wireless communication device to inquire the user if the user profile can be changed. If the user allows the changes to be made, the processor 10 sets the properties of the wireless communication device 1 to comply with the new user profile defined in the event. The end of the event can be monitored by the processor 10 by the principle corresponding to that presented above.

Moreover, in accordance with an advantageous embodiment of the invention, the wireless communication device 1 can be controlled to be turned at a predetermined time of day, *e.g.* in the evening, to a power saving state corresponding to the power-off user profile, wherein primarily the timer function is operating. Thus, the user can turn on the wireless communication device 1 at a suitable moment of time, or if the timer function is in use in the power saving state, the turning on can be made at a predetermined moment of time and, if necessary, the wireless communication device 1 can also produce a sound signal when it is turned on.

Said power-off user profile 307 is preferably applicable for use also *e.g.* in hospitals, because in them the user of the wireless communication device 1 is usually forbidden. Thus, a person working in a hospital can set his/her working hours in the calendar of his/her own wireless communication device 1 and define a power-off user profile in it, wherein the user does not need to worry about turning off the wireless communication device 1 when he/she goes to work. Also in this case, there is reason to request for a confirmation from the user at the end of the working hours entered in the calendar until the power-off user profile is changed to another user profile, because the user may still stay at the working place after the working hours defined in the calendar, *e.g.* to work overtime.

The wireless communication device 1 can be a so-called multi-service mobile communication device, such as the Nokia 9110 Communicator, which contains not only telephone functions but also *e.g.* a memo, a calendar and other useful functions. Even if the telephone functions of such a wireless communication device 1 are turned off, the user can advantageously use these other functions *e.g.* by his/her work.

In an advantageous embodiment of the invention, the user profiles can also be provided with a so-called default user profile, wherein the functional settings of the wireless communication device 1 are set to comply with this default user profile at the stage when the time of duration defined for the activated user profile has expired, *e.g.* a meeting has ended.

The act of setting the functional properties of the wireless communication device 1 according to the invention by means of user profiles connected with calendar events can also be applied in the following way. At the stage when the time comparison indicates that a calendar event stored in the wireless communication device 1 is starting, preferably the processor 10 stores the functional properties valid at the moment in the memory means 11 and sets the settings complying with the user profile defined in the calendar event as the new functional properties. After the termination of the calendar event, the processor 10 preferably restores the functional settings of the wireless communication device 1 to comply with the functional settings stored in the memory means 11.

In practical applications, situations may occur in which the moment of termination of the active user profile is later than the moment of activating another user profile. Thus, in an advantageous embodiment of the invention, the functional properties of the wireless communication device are set to comply with this user profile irrespective of the moment of termination defined for the active user profile. It is also possible to prioritize different user profiles, wherein when the time definitions overlap, it is also examined whether any of the user profiles that would be set active has a higher priority than the user profile active at the time. If such a user profile is found, the functional properties of the wireless communication device 1 are set to comply with this user profile. In other cases, the settings are retained to comply with the user profile active at the time.

It is obvious that the present invention is not limited solely to the embodiment presented above, but it can be modified within the scope of the appended claims.

## Claims

1. A method in a wireless communication device (1) with one or more functional properties that can be set by the user, in which method time information is maintained, user profiles (302―308) are set in which a setting value is defined for at least one said functional property of the wireless communication device (1), and one of said user profiles (302―308) is selected as an active user profile, wherein those properties of the wireless communication device for which a setting value is defined in said activated user profile, are set according to the setting values defined in said activated user profile, **characterized** in that the method also includes
- selecting at least moment of activation for at least one user profile (302―308), and
- comparing said time information with the moments of activation defined for the user profiles (302―308), wherein when the moment of activation of a user profile (302―308) is up, the functional properties of the wireless communication device are set according to said user profile (302―308).

2. The method according to claim 1, **characterized** in that in the method a moment of termination is determined for the user profile (302―308), and said time data is compared with the moment of termination defined for the active user profile (302―308), wherein when the moment of termination is up, the functional properties of the wireless communication device (1) are restored to the state in which they were before the activation of said user profile (302―308).

3. The method according to claim 1, **characterized** in that in the method a moment of termination for the user profile (302―308) and a default user profile are defined, and said time data is compared with the moment of termination defined for the active user profile (302―308), wherein after the defined time of duration, said default user profile is selected to be activated, and the functional properties of the wireless communication device (1) are set to comply with the definitions of said default user profile.

4. The method according to claim 3, **characterized** in that the activation of said default user profile is confirmed by the user of the wireless communication device (1).

5. The method according to claim 2, 3 or 4, **characterized** in that further in the method, when one user profile (302―308) is active, said time data is compared with the moment of activation defined for the other user profiles (302―308), wherein when the moment of activation of another user profile (302―308) is up, the functional properties of the wireless communication device are set to comply with this user profile (302―308), irrespective of the moment of termination defined for said active user profile (302―308).

6. The method according to any of the claims 1 to 5, in which a ringing tone is generated to indicate an incoming call to the wireless communication device (1), **characterized** in that the volume of the ringing tone of the wireless communication device (1) is defined in the user profile (302―308).

7. The method according to any of the claims 1 to 6, in which a receiver (3) or a speaker is used to generate a sound signal in the wireless communication device (1), **characterized** in that the sound volume of the receiver/speaker (3) of the wireless communication device (1) is defined in the user profile (302―308).

8. The method according to any of the claims 1 to 7, in which information is displayed in the wireless communication device (1) with a display device (5) which is lighted with a backlight (16), **characterized** in that the turning on or off of the backlight (16) of the display device in the wireless communication device (1) is defined in the user profile (302―308).

9. The method according to any of the claims 1 to 8, in which a keypad (4) is used in the wireless communication device (1) to control the functions of the wireless communication device (1), and key tones are generated of pressings of the keys in the keypad (4), **characterized** in that the turning on or off of the sound signals to be generated of the pressings of the keys in the keypad (4) are defined in the user profile (302―308).

10. The method according to any of the claims 1 to 9, **characterized** in that one said user profile is a power-off user profile (308), in which a moment of time is defined for turning off the wireless communication device (1).

11. The method according to any of the claims 1 to 10, **characterized** in that a setting value substantially independent of the user profile, and a condition for its implementation, are defined for at least one functional property of the wireless communication device (1), wherein upon fulfilment of said condition, said functional property of the wireless communication device (1) is set in said setting value.

12. A wireless communication device (1) comprising means for setting one or more functional properties, means (19) for defining the time, means (10, 11) for defining at least one user profile (302―308) in which a setting value is defined for at least one said functional property of the wireless communication device (1), means (12a―17a, 12―17) for selecting the user profile (302―308) as active, and means (12a―17a, 12―17) for setting the functional properties of the wireless communication device (1) according to the setting values defined in the selected activated user profile (302―308), **characterized** in that the wireless communication device (1) also comprises:
- means (10, 11) for setting at least one moment of activation for at least one user profile (302―308),
- means (10) for comparing the moments of activation defined for the user profiles (302―308) with the time defined, and
- means (10, 12a―17a) for selecting a user profile (302―308) active when the moment of activation defined for it is up.

13. The wireless communication device (1) according to claim 12, which comprises a keypad (4) and means (15a, 15) for generating key tones of pressings of keys in the keypad (4), **characterized** in that the turning on or off of the key tones is defined in the user profile (302―308).

14. The wireless communication device (1) according to claim 12 or 13, which comprises a display device (5) and a backlight (16) to light the display device, **characterized** in that the turning on or off of the backlight (16) of the display device is defined in the user profile (302―308).

15. The wireless communication device (1) according to claim 12, 13 or 14, which comprises communication means (20) for incoming and outgoing communication, **characterized** in that the user profile (302―308) comprises setting values defined for such functional properties of the wireless communication device (1) which affect incoming communication to the wireless communication device (1).

16. The wireless communication device (1) according to claim 15, which comprises means for indicated an incoming call with a ringing tone, **characterized** in that the volume of the ringing tone is defined in the user profile (302―308).

17. The wireless communication device (1) according to claim 15 or 16, which comprises a receiver (3) or a speaker to generate a sound signal, **characterized** in that the sound volume of the receiver/ speaker is defined in the user profile (302―308).
